# EUROPEAN PATENT SPECIFICATION

(11) **EP 1 936 881 B1**
(45) Date of publication and mention of the grant of the patent: **30.05.2012**
(21) Application number: 06301280.1
(22) Date of filing: 21.12.2006
(51) Int. Cl.: H04L 12/56, H04J 3/06

(54) **Controlling wander induced by packet delay variation in a TDM over ethernet transmission network**
Überwachung von durch Paketverzögerungsveränderung induziertem Abgleiten in einem TDM-über-Ethernet-Übertragungsnetzwerk
Contrôle du dérapage induit par la variation de retard des paquets dans un multiplexeur temporel dans un réseau de transmission Ethernet

(43) Date of publication of application: 25.06.2008
(73) Proprietor: Alcatel Lucent, 75007 Paris (FR)
(72) Inventor: Gerosa, Marzio, 20059, VIMERCATE (IT); Gariani, Giancarlo, 20062, MILANO (IT); Filia, Paolo, 20133, MILANO (IT)
(74) Representative: Shamsaei Far, Hassan

(56) References cited:
- EP-A- 0 691 769
- EP-A2- 1 176 774
- US-A1- 2004 190 548

## Description

The present invention relates to a method and a system for controlling signal Packet Delay Variation (PDV) in a TDM over Ethernet transmission network where TDM packets and data packets are transmitted in independent lengths of time. One particular application of the invention is in the so-called Circuit Emulation Service (CES) The invention proposes a solution for reducing wander induced on a CES system using TDM as is described in detail below.

### BACKGROUND OF THE INVENTION

CES is a technique that allows a Packet Switched Network (PSN) to emulate the characteristics of TDM circuits and therefore provide TDM based services such as T1/E1, T3/E3 leased lines. Therefore, this technique is of particular interest in relation to Ethernet transmission networks where the emulation of a TDM circuit over PSN allows for offering TDM services, for example by a service provider to a customer. Examples of such services are architectures such as PWE3 (described in IETF RFC 3985), TDM over MPLS (described in ITU-T Y.1413) or TDM across Metro Ethernet networks (MEF 8).

Such type of TDM packets are transmitted through a physical layer, where the transmission layer is shared by packets generated by other services, referred to as native data packets.

According to the existing standards, *e.g*. IEEE 802.3 CSMA/DC (Carrier Sense Multiple Access with Collision Detection), in such applications, a packet arriving at a transmission physical layer, is transmitted as soon as the layer is free, i.e. the layer is not busy transmitting a previously arrived packets. This operation is known as "statistical multiplexing".

TDM packets have always the same length and arrive at the physical layer at a very regular rate. For example, taking into account a 2.048 Kbit/s TDM stream, one will have 1000 packets per second inserting 256 TDM bytes in each packet payload, whereas packets of native data (hereinafter will be referred to as data) may be of any allowed length and may arrive at the physical layer in random order.

When the physical layer is busy transmitting a data packet, and a TDM packet arrives, the latter is stored in an appropriate buffer, waiting until transmission of the data packet is finished. Thus the size of the data packet affects the waiting time of the TDM packet, meaning a relatively longer data packet imposes a relatively longer waiting time on the TDM packet.

On the other hand, the slower the speed of transmission of the physical layer is, the longer the waiting time of the TDM packet will be.

This phenomenon has the consequence of increasing the so-called Packet Delay Variation (PDV) which affects the quality of the rebuilt TDM circuits by corresponding inter-working functions at the receive side. PDV is in principle the difference between the respective delays of two incoming packets. A quality phenomenon related to PDV with which the present invention is concerned is the so-called wander. In brief, wander is a representation of variations of the significant instants of a digital signal from their ideal position in time, where these variations are usually of frequencies less than 10Hz. In other words, it relates to the variation of the bit rate of a TDM signal which in principle should have had a constant bit rate. Thus in relative terms, a poor (bigger) PDV results in a worse wander performance on the rebuilt TDM circuit at the receive side.

In order for a CES system to be compliant with existing TDM services standards, the wander has to be kept under a certain, allowed maximum value described by a corresponding standardization body or by corresponding international recommendations. One example of such recommendations is ITU-T G.823 for E1. Therefore, a poor PDV can have a serious impact on the capability of the devices at the receive side in order to maintain the value of the wander at the output of such devices under said limits.

Further prior art is disclosed by the following documents:
US 2004/0190548 A1 describes a method of transporting TDM services over packet networks. According to this document time-division-multiplexed (TDM) input signals carrying a payload comprising data are received and it is determined whether the data comprise synchronous or non-synchronous data. A first encapsulation scheme is selected if the data comprise synchronous data, and a second encapsulation scheme is selected if the data comprise non-synchronous data. The data are encapsulated for transmission over a packet-switched network in accordance with the selected encapsulation scheme.
EP-A-0 691 769 describes a voice circuit emulation system in a packet switching network comprising a plurality of interconnected switching nodes where voice signals are transmitted in circuit emulation packets. Each switching node comprises a circuit emulation server including a plurality of connection tables corresponding each to an incoming connection line, and containing for each incoming connection line, the identification of each outgoing connection line associated to each slot of the circuit emulation packet received from the incoming connection line and the identification of each slot of the packet to be transmitted on the outgoing connection line. A switching module looks up the connection table for each slot contained in each incoming circuit emulation packet received from all incoming lines and thereby transferring the contents thereof to the slot of the outgoing connection line identified in said connection table. These documents however do not disclose the possibility of fragmenting data packets into a number of data blocks of a predetermined length and transmitting said data blocks and said TDM packets according to a predetermined order.

It is therefore desired to provide a solution for controlling the Packet Delay Variation so as to maintain the value of the wander of said rebuilt TDM circuit at a receive side under a corresponding maximum value.

### DESCRIPTION OF THE INVENTION

The above objective is achieved by means of the solution proposed by the present invention according to which data packets are fragmented into blocks of smaller size before entering the physical layer, *i.e*. before performing the statistical multiplex. The size of the fragments into which the data packet is broken may be determined according to the particular requirements of each application.

Accordingly one object of the present invention is that of providing a method of controlling PDV in a TDM over Ethernet transmission network wherein TDM packets and data packets are transmitted in independent lengths of time, characterized in that the data packets are fragmented into a number of data blocks of a predetermined length, and wherein said data blocks and said TDM packets are transmitted according to a predetermined order. According to an aspect of the invention, said data blocks and optionally said TDM packets are classified according to at least one priority criterion.

According to another aspect of the invention, the predetermined order is based on said at least one priority criterion or a combination of more than one priority criterion.

Another object of the present invention is that of providing a transmitter for transmitting TDM signals over an Ethernet network adapted for transmitting TDM packets and data packets in independent lengths of time, characterized in that the transmitter has means for fragmenting the data packets into a number of data blocks of a predetermined length, and means for transmitting said data blocks and said TDM packets according to a predetermined order. According to another aspect of the invention, said predetermined order is executed by a control unit.

Another object of the present invention is that of providing a control unit for use in the transmitter of the invention comprising processing means adapted to order data blocks and the TDM packets according to a predetermined order.

A further object of the present invention is that of providing a TDM over Ethernet transmission system comprising the transmitter of the invention.

These and further feature and advantages of the present invention are described in more detail in the following description as well as in the claims With the aid of the accompanying drawings.

### BRIEF DESCRIPTION OF THE DRAWINGS

Figure 1 is a schematic representation of a known transmission system based on CES in which TDM packets and data packets are transmitted through Ethernet.

Figure 2 is a schematic representation of the transmit side of a transmission system based on CES in which TDM packets and data packets are transmitted through Ethernet according to a first embodiment of the present invention.

Figure 3 is a schematic representation of the transmit side of a transmission system based on CES in which TDM packets and data packets are transmitted through Ethernet according to a second embodiment of the present invention.

### EXAMPLES OF PREFERRED EMBODIMENTS

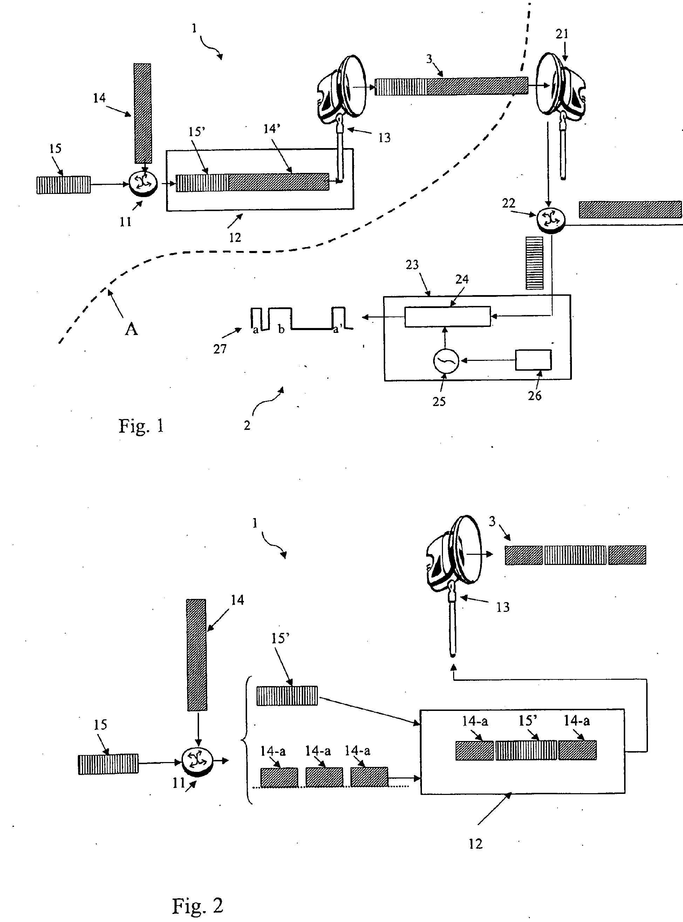

Before the description of preferred embodiments of the invention, reference is made to figure 1 in order to describe in further detail the operation of a known transmission system based on CES in which TDM packets and data packets are transmitted through Ethernet. For the sake of simplification, the figure only shows those element and features which are needed for a better understanding of the principles of operation of the known transmission system.

Thus figure 1 shows a transmission system having a transmit side 1 and a receive side 2. For the sake of clarity, the transmit side 1 and the receive side 2 are separated in the figure by the broken line A.

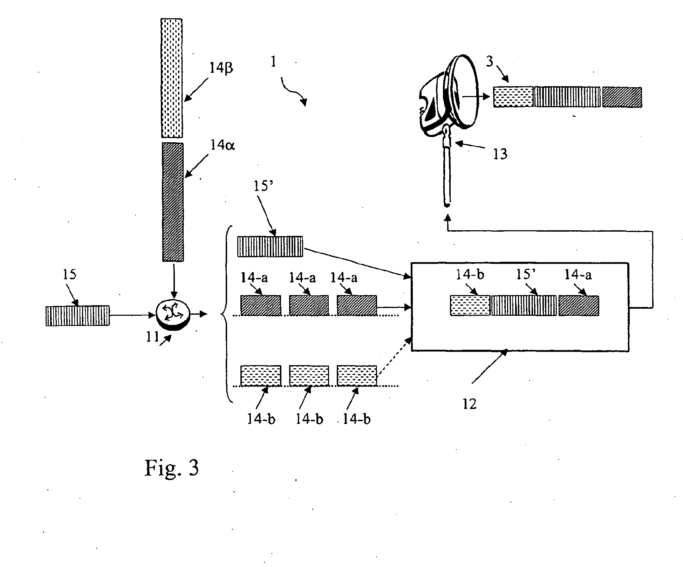

The transmit side 1, has a statistical multiplexer unit 11 and a packet transmission layer 12 and 13, that can be reasonably assumed to be a transmission physical layer as a radio link, a fiber link or an electrical link . In figures 1 (as well as figures 2 and 3 discussed further below) it has been assumed the packet transmission layer comprises a transmission unit 12 and a radio unit 13. In what is concerned with the present description, the statistical multiplexer unit 11 is in charge of selecting either a data packet 14 or a TDM packet 15 for transmission while maintaining the other packet waiting in a queue. Thus, the packet in the queue (be it data or TDM packet) is transmitted once the transmission of the previous packet which was being transmitted in finalized. In this manner, the transmission unit 12 of the packet system receives a stream of packets as schematically shown in figure 1, where 14' represents a data packet and 15' represents a TDM packet and where the data packet 14' precedes the TDM packet 15'.

The packet system may, for example, comprise a radio unit as explaned above. The transmission unit 12 feeds the stream of packets 14'-15' to the radio unit 13 which in turn transmits, by mean of an appropriate antenna, the transmit signal 3 towards the receive side 2.

The receive side 2, includes a radio unit 21 which receives the incoming signal 3 by means of an appropriate antenna. Here also a receive unit is typically used which is not shown for the sake of simplification.

The signal is then processed in a statistical demultilpexer unit 22 which is in charge of separating the data packets and the TDM packets contained in the stream of packets received by the radio unit 21. The TDM packets as extracted are then fed to an adaptive clock recovery unit 23. The adaptive clock recovery unit includes a buffer unit 24 an oscillator 25 and a control unit 26. The incoming TDM packets are first stored in the buffer unit 24 so as to be subsequently output once the complete packet is stored therein.

Different delays of the arriving TDM packets give rise to different filling levels in the buffer unit 24. Due to this variation in filling levels, the oscillation frequency of the oscillator 25 has to be changed in order to avoid overflow or underflow event in the buffer and trigger its subsequent output. The change in the oscillation frequency of the oscillator is controlled and commanded by the control unit 26. Examples of a control unit 26 may be a microprocessor or a hardware algorithm.

However, the control of the variation in the clock frequency is not performed in an ideal manner and thus in occasions the signal is clocked at times which do not correspond to its ideal position in time. As stated further above, this is the phenomenon which gives rise to wander. An exemplary representation of the wander as viewed at the output of the adaptive clock recovery unit 23, is schematically shown by means of a graph 27 where pulses a and b are shown at the left-hand side of the graph and pulse a', at the right-hand side, is shown to be displaced a certain distance which represents the presence of wander.

As an example, a 1000 byte long data packet, *i.e.* 8kbits, being transported at 40 Mb/s introduces 200 µs (8kbits ÷ 40Mbits/s) of delay on the waiting TDM packet which needs to be compensated at the receive side before the TDM signals is output from the buffer unit. The compensation is, at least in part, performed by the variation in oscillation frequency of the oscillator which, as discussed above gives rise to wander.

Referring now to figure 2, there is shown a schematic representation of the transmit side of a transmission system according to the present invention. In this figure, like elements or features are given like reference numerals as those of figure 1. Here also, the transmission system is based on CES in which TDM packets and data packets are transmitted through Ethernet.

As shown in figure 2, the transmit side 1 has a statistical multiplexer unit 11, a transmission unit 12 and a radio unit 13, the transmission unit and the radio unit pertaining to a packet transmission system. Data packets 14 and TDM packets 15 are fed into the transmitter side in a known manner.

However according to the invention, before transmission, the data packet 14 is fragmented into a number of data blocks 14-a of a predetermined length.

The fragmentation may be performed at various stages. It may be performed before the data packets enter the statistical multiplexer unit 11 or within the statistical multiplexer unit 11 itself. One example of such unit may be a hardware switch implemented in an FPGA (Field Programmable Gate Array) based solution. The length of the data blocks in which the data packet is fragmented may be determined according to a variety of criteria, either individually or in combination therebetween. For example one criterion for determining the length of data blocks may be the size of the original data packet such that a relatively large data packet is fragmented into a higher number of blocks as compared to a relatively short data packet. Another criterion may be that of establishing a fixed or a maximum size for the data blocks . These criteria may be stored in an appropriate storage or repository unit and accessed to by means of appropriate processing or control units as known by a person skilled in the related art.

The data blocks 14-a, are then forwarded to the transmission unit 12 for transmission. In case there arrives a TDM packet 15, this is also forwarded to the transmission unit 12 for transmission.

According to the invention, the data blocks 14-a and the TDM packets 15' are transmitted one after the other in a predetermined order, wherein said order of transmission may be determined according to the requirements of the transmission. For example while a first data block is transmitted, a TDM packet may be waiting in a queue and subsequently transmitted once the transmission of the data block is finalized. In figure 2, a situation is shown where, in the transmission unit 12, a first data block 14-a is followed by a TDM packet 15' and the latter is followed by another data block 14-a. Other orders of transmission are also possible. The determination of the order of transmission may be performed by a conventional control unit such as for example a microprocessor according to a criterion based on the distinctive features of the different packet streams to be statistically multiplexed. Examples of such criterion are variable bit rate, constant bit rate, or the like. A further reasonable criterion may based on priority per stream according to a Quality of Service implementation (standard IEEE 802.1 p) or the use of the Vlan Tagging (standard IEEE 802.3ac).

The control unit may form part of the statistical multiplexer unit 11 or it may be a unit external to the statistical multiplexer unit 11 capable of commanding the order of transmission to the latter.

The transmission unit 12 then feeds the stream of packets 14a-15'-14a to the radio unit 13 which in turn transmits, by mean of an appropriate antenna, the transmit signal 3 towards the receive side.

The receive side, although not shown in figure 2, may have in principle similar structural and functional characteristics as those shown in relation to the known transmission system of figure 1. In this manner, at the receive side (see figure 1) the incoming TDM packets are first separated from the data blocks in the statistical de-multiplexer unit 22, then stored in a buffer unit 24 and subsequently output as shown in the figure.

However, according to the invention, due to the relatively smaller size of the data blocks as compared to the TDM packets, the storage time in the buffer unit 24 is comparatively more regular. As most of the data blocks, or in certain cases all the data blocks, are of the same size, the variation in storage time of the TDM packets in the buffer 24 is reduced, thus requiring smaller variations in the oscillation frequency of the oscillator 25. The reduction of the variation in the oscillation frequency gives rise to a reduction in the level of wander.

Advantageously, after the stage of fragmentation, the data blocks are classified according to one or a plurality of priority criteria.

Figure 3 shows an alternative embodiment of the invention wherein the data blocks are classified according to a priority criterion, before being transmitted. In this case data blocks with high priority are transmitted before data blocks with low priority. Furthermore, TDM packets may also be included in such priority classification and thus be transmitted prior or after a data block as a function of said priority classification.

Referring now to figure 3 wherein like elements or features have like reference numerals as those of figures 1 or 2, there is shown substantially the same structure as that of figure 2 with the exception that the data packets 14α and 14β are fragmented into a first class of data blocks 14-a and a second class of data blocks 14-b. It is assumed that the first class of data blocks 14-a has a higher priority than the second class of data blocks 14-b. In this case, the transmitter first transmits the high priority data block 14-a and later the low priority data block 14-b. In the example shown in figure 3, the transmission unit 12 first transmits a high priority data block 14-a, next a TDM packet 15', and the latter followed by a low priority data block 14-b.

The advantage of classifying the data blocks, or if preferable also the TDM packets, into priority classes is that the determination of the order of transmission becomes easier and the order may be changed by changing the classification criteria.

The transmission unit 12 then feeds the stream of packets to the radio unit 13 which in turn transmits, by mean of an appropriate antenna, the transmit signal 3 towards the receive side.

The two classes of data blocks 14-a and 14-b described above are mentioned in an exemplary manner and those skilled in the art will realize that the classification may be done into more than two priority classes without departing from the scope of the invention.

By means of the solution of the invention the statistical multiplex operates between TDM packets and data blocks (instead of data packets as is the case in conventional systems) which are not only of a relatively smaller size but also their size may be predetermined, thus providing important advantages in order to control the level of the wander.

As a further example of such advantages, an Ethernet data packet may be considered which can be of any size between 64 to 1518 bytes long, or longer even up to 10 Kbytes long if large ("jumbo") frames are used. Taking the example of 1518 byte and assuming that one such packet is fragmented into fragments of 100 bytes, it become readily clear that by transmitting the fragments instead of the whole packet the waiting time may be reduced by a factor of 15. As already discussed above, this reduction will result in a lower PDV and thus will improve the level of wander at the receive side.

The statistical multiplexer unit as well as the transmission unit and the control means mentioned in this description may include blocks which can be hardware devices, software modules or combination of hardware devices and software modules

This method can be advantageously implemented over a transmission physical layer such as a fiber/electric link in a Packet Switched Network, or on a radio link in a radio transmission network, for example digital, medium-high capacity, point-to-point microwave radio links, including means like an Application Specific Integrated Circuit (ASIC), a Field Programmable Gate Array (FPGA) and/or a microprocessor, and in a preferred embodiment through or together with a software program such as Very high speed integrated circuit Hardware Description Language (VHDL) or C programming language. Therefore, it is understood that the scope of the protection is extended to such a program and in addition to a computer readable means having a message therein, such computer readable storage means contain program code means for the implementation of one or more steps of the method, when this program is run on a computer, an ASIC, an FPGA or a microprocessor.

It is to be noted that the transmitter or the transmission system or the transmission network or the control unit of the invention can be used to practice another and materially different method and is not be construed to be limited to practicing only the method as claimed in the present invention. Likewise, the method of the invention can be practiced by another materially different system, device, apparatus or equipment than the ones claimed in the present invention.

Further it is to be noted that the list of structures corresponding to the claimed means is not exhaustive and that one skilled in the art understands that equivalent structures can be substituted for the recited structure without departing from the scope of the invention.

It is also to be noted that the order of the steps of the method of the invention as described and recited in the corresponding claims is not limited to the order as presented and described and may vary without departing from the scope of the invention.

## Claims

1. A method of controlling packet delay variation in a TDM over Ethernet transmission network wherein TDM packets (15) and data packets (14) are transmitter in independent length of time using statistical multiplexing, **characterized in that** before transmission, the data packets (14) are fragmented into a number of data blocks (14-a, 14b) of a predetermined length for reducing a variation in storage time of the TDM packets at a receive side, said variation of storage time causing a reduction in packet delay variation; and wherein said data blocks (14-a, 14b) and said TDM packets (15) are transmitted according to a predetermined order, said order being determined according to transmission requirements, and wherein the size of each data block is smaller than the size of the TDM packet.

2. A method according to claim 1, wherein said data blocks (14-a. 14b) are classified according to at least one priority criterion.

3. A method according to claim 2, wherein said TDM packets (15) are classified according to said at least one priority criterion.

4. A method according to claim 2 or 3 wherein the predetermined order is determined based on said at least one priority criterion.

5. A method according to claim 2 or 3 wherein the predetermined order is determined based on a combination of more than one priority criterion.

6. A transmitter for transmitting TDM signals over an Ethernet network adapted for transmitting TDM packets (15) and data packets (14) in independent lengths of time using statistical multiplexing, **characterized in that** the transmitter has means for fragmenting, before transmission, the data packets into a number of data blocks (14-a, 14b) of a predetermined length for reducing a variation in storage time of the TDM packets at a receive side, said variation of storage time causing a reduction in packet delay variation; and means for transmitting said data blocks (14-a, 14b) and said TDM packets (15) according to a predetermined order, said order being determined according to transmission requirements, and wherein the size of each data block is smaller than the size of the TDM packet.

7. A transmitter according to claim 6, wherein said predetermined order is executed by a control unit.

8. A transmitter according to claim 6 or 7, comprising a statistical multiplexer unit (11) and a packet transmission system, the packet transmission system comprising a transmission unit (12) and a radio unlit (13), wherein the statistical multiplexer unit is adapted to send a signal comprising at least a data block (14-a, 14b), at least a TDM packet (15) or a combination based on said predetermined order.

9. A transmitter according to any one of the preceding claims 6-8, comprising means for classifying said data blocks (14-a, 14b) according to at least one priority criterion.

10. A transmitter according to claim 9 wherein said means for classifying said data blocks (14-a, 14b) is also adapted for classifying said TDM packets according to said at least one priority criterion or a combination of more than one priority criterion.

11. A control unit for use in the transmitter of claim 7 comprising processing means adapted to order data blocks (14-a, 14b) and the TDM packets (15) according to a predetermined order.

12. A TDM over Ethernet transmission system comprising the transmitter of claim 6.

13. A TDM over Ethernet network comprising the transmission system of claim 12.

14. A software program comprising instructions for performing the steps of claim 1 when said software program is run on a computer.

15. A computer readable storage means for storing the software program of claim 14.

## Patentansprüche

1. Verfahren zur Steuerung von Paketverzögerungsveränderungen in einem TDM-über-Ethernet-Übertragungsnetzwerk, wobei TDM-Pakete (15) und Datenpakete (14) in unabhängigen zeitlichen Längen unter Abwendung des statistischen Multiplexvertahrens übertragen werden, **dadurch gekennzeichnet, dass** die Datenpakete (14) vor der Übertragung in eine Anzahl von Datenblöcken (14-a, 14b) einer vorgegebenen Länge fragmentiert werden, um eine Veränderung der Speicherzeitdauer der TDM-Pakete an einer Empfängerseite zu reduzieren, wobei die besagte Veränderung der Speicherzeitdauer eine Reduzierung der Paketverzögerungsveränderung verursacht; und wobei die besagten Datenblöcke (14-a, 14b) und die besagten TDM-Pakete (15) gemäß einer vorgegebenen Reihenfolge übertragen werden, wobei die besagte Reihenfolge gemäß den Übertragungserfordernissen bestimmt wird, und wobei die Größe eines jeden Datenblocks kleiner als die Größe des TDM-Pakets ist.

2. Verfahren nach Anspruch 1, wobei die besagten Datenblöcke (14-a, 14b) gemäß mindestens einem Prioritätskriterium klassifiziert werde.

3. Verfahren nach Anspruch 2, wobei die besagten TDM-Pakete (15) gemäß dem besagten mindestens einen Prioritätskriterium klassifiziert werden.

4. Verfahren nach Anspruch 2 oder 3, wobei die vorgegebene Reihenfolge auf der Basis des besagten mindestens einen Prioritätskriteriums bestimmt wird.

5. Verfahren nach Anspruch 2 oder 3, wobei die vorgegebene Reihenfolge auf der Basis einer Kombination von mehr als einem Prioritätskriterium bestimmt wirt.

6. Sender zum Übertragen von TDM-Signalen über ein Ethernet-Netzwerk, ausgelegt für die Übertragung von TDM-Paketen (15) und Datenpakete (14) in unabhängigen zeitlichen Längen unter Abwendung des statistischen Multiplexverfahrens, **dadurch gekennzeichnet, dass** der Sender Mittel zum Fragmentieren, vor der Übertragung, der Datenpakete in eine Anzahl von Datenblöcken (14-a, 14b) einer vorgegebenen Länge, um eine Veränderung der Speicherzeitdauer der TDM-Pakete an einer Empfängerseite zu reduzieren, wobei die besagte Veränderung der Speicherzeitdauer eine Reduzierung der Paketverzögerungsveränderung verursacht; und Mittel zum Übertragen der besagten Datenblöcke (14-a, 14b) und der besagten TDM-Pakete (15) gemäß einer vorgegebenen Reihenfolge, wobei die besagte Reihenfolge gemäß, den Überfragungserfordernissen bestimmt wird, und wobei die Größe eines jeden Datenblocks kleiner als die Größe des TDM-Pakets ist, aufweist.

7. Sender nach Anspruch 6, wobei die besagte vorgegebene Reihenfolge durch eine Steuereinheit ausgeführt wird.

8. Sender nach Anspruch 6 oder 7, umfassend eine statistische Multiplexereinheit (11) und ein Paketübertragungssystem, wobei das Paketübertragungssystem eine Übertragungseinheit (12) und eine Funkeinheit (13) umfaßt, wobei die statistische Multiplexereinheit dazu ausgelegt ist, ein Signal mit mindestens einem Datenblock (14-a, 14b), mindestens einem TDM-Paket (15) oder einer Kombination davon auf der Basis der besagten vorgegebenen Reihenfolge zu senden.

9. Sender nach einem beliebigen der Anspräche 6-8, umfassend ein Mittel zum Klassifizierten der besagten Datenblöcke (14-a, 14b) gemäß mindestens einem Prioritätskriterium.

10. Sender nach Anspruch 9, wobei das besagte Mittel zum Klassifizierten der besagten Datenblöcke (14-a, 14b) ebenfalls für die Klassifizierung der besagten TDM-Pakete gemäß dem besagten mindestens einen Prioritätskriterium oder einer Kombination von mehr als einem Prioritätskriterium ausgelegt ist.

11. Steuereinheit zur Verwendung in einem Sender gemäß Anspruch 7, umfassend Verarbeitungsmittel, weiche für das Einreihen der Datenblöcke (14-a, 14b) und der TDM-Pakete (15) gemäß einer vorgegebenen Reihenfolge ausgelegt sind.

12. TDM-über-Ethernet-Übertragungssystem, umfassend den Sender gemäß Anspruch 6.

13. TDM-über-Ethernet-Netzwerk, umfassend das Übertragungssystem gemäß Anspruch 12.

14. Softwareprogramm mit Befehlen zum Durchführen der Schritte gemäß Anspruch 1, wenn das besagte Softwareprogramm auf einem Computer läuft.

15. Computertesbares Speichermittel zum Speichern das Softwareprogramm gemäß Anspruch 14.

## Revendications

1. Procédé de commande de la variation de retard de paquets dans un réseau de transmission TDM sur Ethernet dans lequel des paquets TDM (15) et des paquets de données (14) sont transmis selon des durées indépendantes en utilisant le multiplexage statistique, **caractérisé en ce que**, avant la transmission, les paquets de données (14) sont fragmentés en plusieurs blocs de données (14-a, 14b) d'une longueur prédéterminée pour réduire une variation du temps de stockage des paquets TDM au niveau d'un côté de réception, ladite variation du temps de stockage entraînant une réduction de la variation de retard de paquets ; et dans lequel lesdits blocs de données (14-a, 14b) et lesdits paquets TDM (15) sont transmis selon un ordre prédéterminé, ledit ordre étant déterminé conformément aux exigences de transmission, et dans lequel la taille de chaque bloc de données est plus petite que la taille du paquet TDM.

2. Procédé selon la revendication 1, dans lequel lesdits blocs de données (14-a, 14b) sont classés selon au moins un critère de priorité.

3. Procédé selon la revendication 2, dans lequel lesdits paquets TDM (15) sont classés selon ledit au moins un critère de priorité.

4. Procédé selon la revendication 2 ou 3 dans lequel l'ordre prédéterminé est déterminé selon ledit au moins un critère de priorité.

5. Procédé selon la revendication 2 ou 3 dans lequel l'ordre prédéterminé est déterminé selon une association de plus d'un critère de priorité.

6. Émetteur pour transmettre des signaux TDM dans un réseau Ethernet adapté pour transmettre des paquets TDM (15) et des paquets de données (14) selon des durées indépendantes en utilisant le multiplexage statistique, **caractérisé en ce que** l'émetteur dispose de moyens pour fragmenter, avant la transmission, les paquets de données en plusieurs blocs de données (14-a, 14b) d'une longueur prédéterminée pour réduire une variation du temps de stockage des paquets TDM au niveau d'un côté de réception, ladite variation du temps de stockage entraînant une réduction de la variation de retard de paquets ; et de moyens pour transmettre lesdits blocs de données (14-a, 14b) et lesdits paquets TDM (15) selon un ordre prédéterminé, ledit ordre étant déterminé conformément aux exigences de transmission, et dans lequel la taille de chaque bloc de données est plus petite que la taille du paquet TDM.

7. Émetteur selon la revendication 6, dans lequel ledit ordre prédéterminé est exécuté par une unité de commande.

8. Émetteur selon la revendication 6 ou 7, comprenant une unité de multiplexage statistique (11) et un système de transmission de paquets, le système de transmission de paquets comprenant une unité de transmission (12) et une unité radio (13), dans lequel l'unité de multiplexage statistique est adaptée pour envoyer un signal comprenant au moins un bloc de données (14-a, 14b), au moins un paquet TDM (15) ou une association selon ledit ordre prédéterminé.

9. Émetteur selon l'une quelconque des revendications précédentes 6 à 8, comprenant des moyens pour classer lesdits blocs de données (14-a, 14b) conformément à au moins un critère de priorité.

10. Émetteur selon la revendication 9 dans lequel lesdits moyens pour classer lesdits blocs de données (14-a, 14b) sont également adaptés pour classer lesdits paquets TDM conformément audit au moins un critère de priorité ou à une association de plus d'un critère de priorité.

11. Unité de commande destinée à être utilisée dans l'émetteur selon la revendication 7 comprenant des moyens de traitement adaptés pour classer des blocs de données (14-a, 14b) et les paquets TDM (15) selon un ordre prédéterminé.

12. Système de transmission TDM sur Ethernet comprenant l'émetteur selon la revendication 6.

13. Réseau TDM sur Ethernet comprenant le système de transmission selon la revendication 12.

14. Programme informatique comprenant des instructions pour exécuter les étapes selon la revendication 1 lorsque ledit programme informatique est exécuté sur un ordinateur.

15. Moyens de stockage lisibles par un ordinateur pour stocker le programme informatique selon la revendication 14.
